# FASCICULE DE BREVET EUROPEEN

(11) **EP 4 048 531 B1**
(45) Date de publication et mention de la délivrance du brevet: **29.11.2023**
(21) Numéro de dépôt: 20799778.4
(22) Date de dépôt: 15.10.2020
(51) Int. Cl.: B60C 11/00

(54) **PNEUMATIQUE A BANDE DE ROULEMENT PERFECTIONNEE**
REIFEN MIT VERBESSERTEM PROFIL
TYRE HAVING AN IMPROVED TREAD

(30) Priorité: 22.10.2019 FR 1911784
(43) Date de publication de la demande: 31.08.2022
(73) Titulaire: COMPAGNIE GENERALE DES ETABLISSEMENTS MICHELIN, 63000 Clermont-Ferrand (FR)
(72) Inventeur: FERNANDEZ, Miguel, 63040 CLERMONT-FERRAND Cedex 9 (FR); SCHACH, Régis, 63040 CLERMONT-FERRAND Cedex 9 (FR); LABRUNIE, Philippe, 63040 CLERMONT-FERRAND Cedex 9 (FR); LONGCHAMBON, Karine, 63040 CLERMONT-FERRAND Cedex 9 (FR); TOBIE, Alexandre, 63040 CLERMONT-FERRAND Cedex 9 (FR)
(74) Mandataire: M.F.P. Michelin
(86) Numéro de dépôt international: PCT/FR2020/051839
(87) Numéro de publication internationale: WO 2021/079047

(56) Documents cités:
- EP-A1- 1 431 078
- EP-A1- 2 928 707
- WO-A1-2018/079799

## Description

La présente invention concerne un pneumatique destiné à être monté sur un véhicule de tourisme, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Un pneumatique comprend un sommet comprenant une armature de sommet, et des mélanges caoutchouteux radialement extérieurs à cette armature de sommet, nommés bande extérieure.

Un pneumatique comprend également deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande extérieure comprend une bande roulement destinée à venir en contact avec le sol par l'intermédiaire d'une surface de roulement et des mélanges caoutchouteux entre la bande de roulement et l'armature de sommet, appelée bande de protection. Les mélanges caoutchouteux de la bande de roulement ont des caractéristiques d'hystérèse et de rigidité qui donnent au pneumatique des performances acceptables en adhérence sol sec et humide, en tenue de route, en usure. Ces caractéristiques diffèrent entre des pneumatiques destinés à des routes de pays tempérés et des pneumatiques conçus pour pouvoir être utilisé sur des routes enneigées. Pour marquer clairement ces différences, les législateurs imposent aux fabricants de pneumatiques des marquages spécifiques, comme le marquage M+S, MS, M&S, MS ou M-S - mud and snow - ou le pictogramme représentant 3 pics enneigés et un flocon de neige, connu des hommes de l'art comme 3PMSF. Ces différents marquages correspondent à des pneumatiques aptes à passer des tests d'adhérence sur routes enneigées.

La bande extérieure ne comprend pas les mélanges caoutchouteux disposés sur le flanc du pneumatique dont une portion pourrait être radialement extérieure et axialement extérieure à l'armature de sommet. Les mélanges flancs qui ont des compositions tout à fait particulières notamment pour résister aux ultra-violets sont exclus des surfaces et des volumes de la bande extérieure. Un mélange caoutchouteux du pneumatique dont plus de 30% de la surface sur une coupe méridienne est radialement intérieure à la couche de sommet la plus radialement intérieure n'est pas un mélange de la bande extérieure mais un mélange flanc.

La bande de roulement d'un pneumatique est délimitée, selon la direction radiale, par deux surfaces circonférentielles dont la plus radialement extérieure est la surface de roulement et dont la plus radialement intérieure est appelée surface de fond de sculpture.

La portion du pneumatique entre la surface de fond de sculpture et l'armature de sommet est appelée bande de protection. La bande de protection est d'une épaisseur radiale au moins égal à 1.5 mm et souvent comprise entre 2 et 3 mm et dont l'un des intérêts est de protéger l'armature de sommet des agressions causées par les obstacles divers présents sur la route.

La bande extérieure comprend un ou plusieurs mélanges caoutchouteux. L'expression « mélange caoutchouteux », désigne une composition de caoutchouc comportant au moins un élastomère et une charge.

Le sommet comprend au moins une armature de sommet radialement intérieure à la bande extérieure. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée hauteur de sculpture D. Il est courant que les profondeurs de la sculpture soit dégressive sur les portions circonférentielles les plus axialement extérieures de la bande de roulement, appelées épaules. La surface de fond de sculpture, ou surface de fond, est une surface torique passant par les points les plus radialement intérieurs des découpures.

Un pneumatique doit répondre à de multiples critères de performance portant sur des phénomènes comme l'usure, l'adhérence sur différents types de sol, la résistance au roulement, le comportement dynamique, la masse. Ces critères de performance conduisent parfois à des solutions s'opposant à d'autres critères. Ainsi, pour une bonne performance en adhérence, le matériau caoutchouteux de la bande de roulement doit être dissipatif et mou. En revanche pour obtenir un pneumatique performant en comportement, notamment en réponse dynamique sur un effort transversal au véhicule et donc principalement dans l'axe de rotation du pneumatique, le pneumatique doit avoir un niveau de rigidité suffisamment élevé, notamment sous effort transversal. Pour une dimension donnée, la rigidité du pneumatique dépend de la rigidité des différents éléments du pneumatique que sont la bande de roulement, l'armature de sommet, les flancs et les bourrelets. La rigidification de la bande de roulement est traditionnellement obtenue soit à travers la rigidification des matériaux caoutchouteux, soit à travers la diminution de la profondeur de la sculpture ou de la diminution du niveau d'entaillement de la sculpture ou de l'épaisseur de la couche de protection. La bande de protection a longtemps été réalisée dans le même mélange caoutchouteux que la bande de roulement mais le besoin de gain de performance notamment en résistance au roulement a conduit à utiliser deux matériaux spécialisés dans chacune des fonctions. Ainsi, la couche de protection n'étant pas adaptée pour être en contact avec le sol, elle est constituée par des mélanges peu dissipatifs, donc de très faible adhérence et de très mauvaise performance en usure.

Dans un besoin de constante amélioration, les fabricants ont constamment poussé vers la multiplication des mélanges caoutchouteux dans la bande de roulement en fonction des différents points de fonctionnement. Dans l'objectif de gain de performances, EP 3007911 décrit un pneumatique muni de deux mélanges caoutchouteux l'un meilleur en adhérence sol sec, l'autre meilleur en adhérence sur sol humide disposés sur différents bords axiaux des nervures de la bande de roulement.

Ces solutions ne sont pas toujours satisfaisantes. Multiplier les mélanges caoutchouteux de la bande de roulement pose des problèmes de recyclage. Les mélanges caoutchouteux étant produits dans des mélangeurs industriels dans des quantités minimales importantes avec des délais de vieillissement, plus le nombre de mélanges caoutchouteux est important, plus le risque d'avoir des matériaux impropres à leur usage augmente et donc plus le nombre de déchets ou chutes augmente. Une possibilité pour réduire ces pertes est de réintroduire les chutes dans le processus de fabrication. Par ailleurs les bandes de roulement comprenant plusieurs mélanges caoutchouteux sont fabriqués par coextrusion de sorte qu'une chute après extrusion n'est ré-incorporable que dans la mesure où les mélanges qui la composent sont compatibles entre eux en termes de performances. Ceci n'est pas forcément le cas entre les bandes de protections et les matériaux adaptés pour entrer dans la composition d'une bande de roulement, une telle solution multiplie donc les déchets. Les industriels sont extrêmement préoccupés par la préservation des ressources naturelles et donc cherchent des solutions pour réduire ces pertes. Dans le même temps, il n'est pas possible de dégrader la résistance au roulement du pneumatique car cette caractéristique est directement liée à la consommation d'énergie par le pneumatique, et est un facteur primordial de l'impact du pneumatique sur l'environnement. Par ailleurs cette solution n'est pas totalement satisfaisante en adhérence en fin de vie, la bande de protection ayant un impact négatif sur cette performance. Tous ces points restent valables pour les pneumatiques destinés à des usages sur routes enneigées, les matériaux de la bande extérieure devant en revanche être testés à des températures reflétant leurs caractéristiques spécifiques d'usage.

D'autres pneumatiques sont décrits dans les documents EP1431078, WO2018079799 et EP2928707.

L'objectif principal de la présente invention est donc d'augmenter le compromis entre la capacité de recyclage, la résistance au roulement et l'adhérence d'un pneumatique conçu pour être utilisé sur une route enneigée et notamment en fin de vie.

Cet objectif est atteint par un pneumatique, pour véhicule de tourisme, portant un marquage sur le flanc indiquant qu'il est conçu pour être utilisé sur une route enneigée, comprenant un sommet comprenant une bande extérieure comportant une bande de roulement destinée à venir en contact avec le sol par l'intermédiaire d'une surface de roulement, deux bourrelets destinés à venir en contact avec une jante et deux flancs reliant le sommet aux bourrelets,
- la bande extérieure étant radialement extérieure à une armature de sommet comprenant des couches de sommet comprenant des éléments de renforcement, et la bande de roulement étant axialement intérieure à la partie des flancs radialement extérieure à l'armature de sommet,
- la bande extérieure étant constituée d'une partie centrale et deux parties axialement extérieures,
- la partie centrale de la bande extérieure étant d'une largeur axiale égale à 80% de la largeur axiale de la surface de roulement,
- la bande extérieure comprenant au moins deux mélanges caoutchouteux, ces deux mélanges caoutchouteux composant au moins 90% du volume de la bande extérieure,
- le premier mélange caoutchouteux étant radialement extérieur au deuxième mélange caoutchouteux, le deuxième mélange caoutchouteux composant au moins 60% du volume des parties axialement extérieures de la bande extérieure et étant disposé en une couche sensiblement continue d'une partie axialement extérieure de la bande extérieure à l'autre, ladite couche étant d'une épaisseur radiale minimale au moins égale à 0,3 mm,
- le premier mélange caoutchouteux ayant un module dynamique de cisaillement G*, à 10% de déformation à 10 Hz à 23°C mesuré selon la norme ASTM D 5992 - 96, au moins égal à 1.35 fois le module dynamique de cisaillement G*, à 10% de déformation à 10 Hz à 23°C mesuré selon la norme ASTM D 5992 - 96, du deuxième mélange caoutchouteux, et au plus égal à 3 fois le module dynamique de cisaillement G*, à 10% de déformation à 10 Hz à 23°C mesuré selon la norme ASTM D 5992 - 96, du deuxième mélange caoutchouteux,
- le premier mélange caoutchouteux ayant une perte dynamique tanD-10_1, mesurée selon la norme ASTM D 5992 - 96, à une température de -10°C et sous une contrainte de 0,7 MPa à 10 Hz, au moins égale à 0,5,
- le deuxième mélange caoutchouteux ayant une perte dynamique tanD23_2 mesurée selon la même norme ASTM D 5992 - 96, à une température de 23°C et sous une déformation à 10% à 10 Hz, au plus égale à 0.3.

Le pneumatique ainsi décrit, comprend une bande extérieure comprenant deux mélanges caoutchouteux, l'un disposé au centre et radialement extérieur à l'état neuf du pneumatique, l'autre moins rigide disposé :
- Autour du plan équateur, radialement intérieurement à la bande de roulement occupant un pourcentage particulier de la bande de protection
- sur les portions latéralement extérieures de la bande extérieure et de la bande de roulement à proximité des extrémités des couches de sommet, appelées épaules, un pourcentage plus ou moins important selon les performances visées de la bande de protection et de la bande de roulement.

Cette configuration n'est pas obligatoirement symétrique de part et d'autre du plan équateur et peut n'être effective que sur l'une des deux épaules.

Pour améliorer la résistance au roulement, il est d'usage de multiplier les matériaux caoutchouteux en utilisant des matériaux de plus basse hystérèse possible sur les portions du pneumatique le permettant. C'est ainsi que la bande de protection est habituellement un mélange de très faible hystérèse apte à absorber l'énergie d'un choc dû au roulage sur un obstacle, tout en étant protégé de l'agression de contact de cet obstacle par le matériau de la bande de roulement qui a les caractéristiques adaptées à cette fonction.

Il est également possible d'améliorer la résistance au roulement en diminuant la rigidité des matériaux dans certaines conditions. Aux niveaux de leurs extrémités axiales, les couches de sommet présentent une double courbure, une circonférentielle équivalente à la partie centrale de la bande de roulement, et l'autre axiale due à la courbure de la couche de carcasse et donc des couches de sommet sur cette portion. L'énergie de mise à plat nécessaire est donc d'autant plus élevée. Pour améliorer la performance en résistance au roulement, pour un pneumatique avec un mélange caoutchouteux donné pour la partie centrale de la bande de roulement, il est donc possible de baisser la rigidité des mélanges aux épaules sur les parties les plus externes de la bande extérieure dans ou au-delà de la limite de la surface de roulement.

Pour un gain sensible en résistance au roulement, il est nécessaire que ce pourcentage du deuxième mélange caoutchouteux soit au moins égal à 60% du volume des parties axialement extérieures de la bande extérieure. Ce deuxième mélange caoutchouteux doit avoir des propriétés de rigidité et d'adhérence telles qu'il puisse être en contact avec le sol de roulage soit à l'état neuf, soit à l'état usé et donc qu'il ait des propriétés hystérétiques compatibles avec cette fonction et donc moins favorables à priori que les mélanges de protection habituellement employés pour baisser la résistance au roulement.

La solution avec trois mélanges, dont un, le mélange de protection dont les propriétés sont très différentes des deux autres mélanges caoutchouteux dégrade de manière inacceptable la capacité de recycler ces mélanges pour des usages liés aux pneumatiques où les compositions sont très précises. Par ailleurs l'utilisation de tels mélanges pour la bande de protection dégradent l'adhérence des pneumatiques notamment en fin de vie. En effet, de manière étonnante, l'adhérence n'est pas uniquement dépendante du matériau en contact avec le sol mais également des matériaux de la bande de protection.

L'invention consiste donc à utiliser un mélange caoutchouteux unique pour la bande de protection et pour la plus grande portion des parties axialement extérieures de la bande extérieure. Ce dit mélange doit être de plus basse rigidité que le mélange caoutchouteux le plus radialement extérieur au centre de la bande de roulement. Ce mélange caoutchouteux doit être apte au contact avec le sol de roulage soit à l'état neuf, soit à l'état usé. L'épaisseur minimale d'une bande de protection est au moins égale à 0,3 mm, de préférence au moins égale à 0.6 mm, au moins égale à 1 mm, la partie sensiblement continue constituée par ledit mélange entre les deux parties axialement extérieures de la bande extérieure, doit avoir les mêmes propriétés.

Pour des performances optimales en comportement, homogénéité d'usure, et permettre le recyclage des chutes, le premier mélange caoutchouteux a un module dynamique de cisaillement G*, à 10% de déformation à 10 Hz à 23°C mesuré selon la norme ASTM D 5992 - 96, au moins égal à 1.35 fois le module dynamique de cisaillement G*, à 10% de déformation à 10 Hz à 23°C mesuré selon la norme ASTM D 5992 - 96, du deuxième mélange caoutchouteux, et au plus égal à 3 fois le module dynamique de cisaillement G*, à 10% de déformation à 10 Hz à 23°C mesuré selon la norme ASTM D 5992 - 96, du deuxième mélange caoutchouteux,

Pour une performance optimale en adhérence sur sol enneigé, le premier mélange caoutchouteux a une perte dynamique tanD-10_1, mesurée selon la norme ASTM D 5992 - 96, à une température de -10°C et sous une contrainte de 0,7 MPa à 10 Hz, au moins égale à 0,5, de préférence au moins égale à 0,7.

Pour une performance optimale en résistance au roulement, le deuxième mélange caoutchouteux a une perte dynamique tanD23_2 mesurée selon la même norme ASTM D 5992 - 96, à une température de 23°C et sous une déformation à 10% à 10 Hz, au plus égale à 0.3.

De préférence bien qu'il existe des mélanges caoutchouteux apte à être en contact avec le sol, moins rigides, le deuxième mélange caoutchouteux a un module dynamique de cisaillement G*, à 10% de déformation à 10 Hz à 23°C mesuré selon la norme ASTM D 5992 - 96, au moins égal à 0,8 MPa et au plus égal à 4MPa, de préférence au moins égal à 1 MPa et au plus égal à 2,5 MPa, pour de bonne performance en usure et en comportement.

Pour des utilisations avec des indices de vitesse élevés et donc généralement des taux de dérive également plus élevés, il est préféré que lequel le deuxième mélange caoutchouteux ait un module d'extension sécant MA300 à 300 % de déformation, mesuré à 23° C selon la norme ASTM D 412-16, au moins égal à 1.7 afin de garantir une forme d'usure correcte sur la partie axialement extérieure de la bande extérieure pour cet usage.

Les propriétés des mélange caoutchouteux sont mesurées selon la norme ASTM D 5992- 96. Par exemple, les modules de cisaillement dynamiques G* et tanδ sont mesurés à 23° C à 10% de déformation à 10Hz, selon la norme ASTM D 5992-96. On enregistre la réponse d'un échantillon de composition réticulée (de préférence éprouvette cylindrique de 4 mm d'épaisseur et de 400 mm2 de section), soumis à une sollicitation sinusoïdale en cisaillement simple alterné, à la fréquence de 10 Hz, à 23°C selon la norme ASTM D 5992 - 96. On effectue un balayage en amplitude de déformation crête à crête de 0,1 à 100 % (cycle aller) puis de 100 à 0,1 % (cycle retour). Le résultat exploité est le facteur de perte (tan(δ)). Pour le cycle retour, on indique la valeur maximale de tan(δ) observée (tan(δ)max à 23°C) et le module G*.

De manière étonnante, par le couplage des parties axialement extérieures de la bande extérieure et bande de protection par l'utilisation d'un matériau unique, la résistance au roulement est améliorée par rapport à une solution à deux mélanges caoutchouteux, l'un pour la bande de roulement et l'autre pour la bande de protection et conservée ou légèrement améliorée par rapport à une solution à 3 mélanges caoutchouteux dont un spécifique pour la bande de protection. Par ailleurs l'invention amène un gain évident de capacité de recyclage.

Le pneumatique étant torique, les rapports de volume entre les deux mélanges caoutchouteux de la bande extérieure sont évalués à partir des surfaces de ces matériaux mesurées sur une ou des coupes méridiennes en tenant compte du taux de creux volumique de la sculpture. Cette pratique est bien connue de l'homme de l'art.

Lorsque le premier mélange caoutchouteux est axialement intérieur au deuxième mélange caoutchouteux, il est nécessaire de veiller à la tenue de l'interface entre les deux premiers et deuxièmes mélanges de la bande extérieure du pneumatique. Pour cela l'interface entre le premier et le deuxième mélange caoutchouteux doit former un angle avec la normale à la surface de roulement au point d'intersection de l'interface avec la surface de roulement au plus égal à 60° en valeur absolue, de préférence au plus égal à 20° en valeur absolue. Pour des angles hors de ces plages, les efforts de cisaillement sous effort transversal en virage, soumettent l'interface des deux produits à des déformations risquant la microfissuration progressive de l'interface au niveau de la zone de contact avec le sol de roulage. Les parties axialement extérieures à ces microfissurations sont progressivement arrachées, générant une zone d'usure irrégulière.

Pour une application à des pneumatiques destinés à des voitures sportives pour lesquelles le comportement est une performance privilégiée, il est préféré que la couche du deuxième mélange caoutchouteux, continue d'une partie externe de la bande extérieure à l'autre, est radialement intérieure dans la partie centrale de la bande de roulement aux surfaces des fonds des rainures ou des sillons circonférentiels de la bande de roulement. Dans ce cas la partie centrale de la bande extérieure est majoritairement composée par le premier mélange caoutchouteux, le plus rigide ce qui garantit une rigidité de la sculpture élevée.

Afin d'améliorer l'usure et l'adhérence en fin de vie, l'invention peut comprendre des rainures ou des sillons circonférentiels qui sont configurés de telle sorte que le taux de creux de surface de roulement augmente avec l'usure du pneumatique, comme des lamelles en forme de goutte d'eau, des creux cachés à l'état neuf, des angles des faces latérales des découpures configurés de tel sorte que le taux de creux surfacique de ladite découpure augmente avec l'usure.

Pour atteindre les propriétés mécaniques visées des premier et deuxième mélanges caoutchouteux, notamment pour leur propriété en résistance au roulement et en adhérence, il est préféré que les premier et deuxième mélanges caoutchouteux comportent des charges renforçantes composées d'au moins 80% de silice, exprimée en pourcentage de la masse totale des charges renforçantes.

Pour des facilités de montage sur le véhicule et notamment pour des pneumatiques symétriques, non directionnels, il est préféré que les volumes de premier et deuxième mélanges caoutchouteux de la bande extérieure soient sensiblement symétriques par rapport au plan équateur.

L'invention nécessite que la bande extérieure soit composée à au moins 90% en volume des deux mélanges caoutchouteux, les 10% restant étant prévus pour l'utilisation éventuelle d'autres mélange caoutchouteux pour remplir d'autres fonctions comme par exemple la conductivité électrique du pneumatique ou assurer le collage de la bande extérieure à l'armature de sommet
La solution optimale est que la bande de roulement est composée de deux mélanges caoutchouteux et l'un de ces mélanges caoutchouteux est un conducteur électrique et est configuré pour que la résistance électrique du pneumatique mesurée selon la norme ISO 16392:2017 soit au plus égale à 10¹⁰ ohms, de préférence au plus égale à 10⁸ ohms.

Dans le cas où le premier et deuxième mélange caoutchouteux de la bande extérieure ne soient pas suffisamment conducteur pour le respect de la norme ISO 16392:2017, une solution avantageuse est que la bande de extérieure est composée de trois mélanges caoutchouteux, le troisième mélange caoutchouteux étant disposé entre la couche d'éléments de renforcement de l'armature de sommet la plus radialement extérieure et la surface de roulement et configuré pour que la résistance électrique du pneumatique mesurée selon la norme ISO 16392:2017 soit au plus égale à 10¹⁰ ohms, de préférence au plus égale à 10⁸ ohms. Ce mélange caoutchouteux est un mélange conçu pour être incorporé dans la bande de roulement tout en contenant une portion de charge conductrice, usuellement du noir de carbone. Ses propriétés le rendent apte à être recyclé avec le premier ou deuxième mélange caoutchouteux de la bande de roulement et ce d'autant plus que son volume est faible. Dans ce cas, il existe une discontinuité très localisée et contingente à la fonction de conductivité électrique dans la couche du deuxième mélange caoutchouteux, seule exception à la continuité de cette dite couche que traduit le terme « sensiblement » continue.

Pour obtenir des performances en résistance au roulement optimale, il est courant pour les mélanges caoutchouteux aptes à être en contact avec le sol de roulage à l'état neuf, ou à l'état usé, de comporter un taux élevé de silice, ce qui peut amener des performances inadéquates de collage sur les couches de sommet lors de la fabrication du pneumatique, avant sa cuisson. Il est d'usage dans ce cas d'utiliser une gomme intermédiaire dite gomme de liaison pour permettre l'adhésion des mélanges de la bande de protection et de la bande de roulement aux couches de sommet. Cette couche de liaison n'a jamais une épaisseur radiale supérieure à 0.6 mm.

Dans le cas où il existe un problème de collant en fabrication entre le deuxième mélange caoutchouteux et la couche de sommet la plus radialement extérieure et que les premier et deuxième mélanges sont conducteurs de l'électricité au point de respecter la norme ISO 16392:2017, la solution préférée est que la bande extérieure soit composée de trois mélanges caoutchouteux et le troisième mélange caoutchouteux soit disposé entre la couche d'éléments de renforcement de l'armature de sommet la plus radialement extérieure et le deuxième mélange caoutchouteux, l'épaisseur maximale de ce troisième mélange caoutchouteux étant au plus égale à 0.6 mm, de préférence au plus égale à 0.4 mm.

Dans le cas où il existe un problème de collant en fabrication entre le deuxième mélange caoutchouteux et la couche de sommet la plus radialement extérieure et que les premier et deuxième mélanges ne sont pas suffisamment conducteurs de l'électricité pour respecter la norme ISO 16392:2017, une solution avantageuse est la bande extérieure soit composée de quatre mélanges caoutchouteux, dans lequel le troisième mélange caoutchouteux soit disposé entre la couche d'éléments de renforcement de l'armature de sommet la plus radialement extérieure et le deuxième mélange caoutchouteux, l'épaisseur maximale de ce troisième mélange caoutchouteux est au plus égale à 0.4 mm, et dans lequel le quatrième mélange caoutchouteux est disposé entre la couche d'éléments de renforcement de l'armature de sommet la plus radialement extérieure et la surface de roulement et adapté pour que la résistance électrique du pneumatique mesurée selon la norme ISO 16392:2017 soit au plus égale à 10¹⁰ ohms, de préférence au plus égale à 10⁸ ohms.

Pour améliorer la recyclabilité des mélanges, le volume total du deuxième mélange caoutchouteux représente au moins 25% et au plus 50% du volume de la bande extérieure.

La fabrication du pneumatique génère des matériaux extrudés de mélanges caoutchouteux qui ne seront pas utilisés pour la fabrication de pneumatiques, appelés des chutes. Par exemple, le réglage d'une machine lors d'un changement de dimension génère de telles chutes et notamment, des chutes composées des mélanges caoutchouteux de la bande extérieure, en particulier de la bande de roulement et de la bande de protection. Dans le cas de configurations avec plusieurs mélanges caoutchouteux dans la bande extérieure, les chutes sont appelées chutes mixtes. De manière à réduire les chutes non valorisées dans le pneumatique, des volumes d'accueil dans un mélange caoutchouteux dit mélange « hôte » sont définis dans les mélanges de la bande extérieure. L'homme de l'art connaît la complexité de mélanger le mélange hôte et les chutes mixtes qui nécessite un temps d'occupation machine pour l'homogénéisation du mélange hôte avec la chute. Ceci implique qu'un seul mélange caoutchouteux est un mélange « hôte » sauf à perdre en productivité, le gain en taux de recyclage.

Les portions des mélanges radialement extérieurs qui ont un fort taux de contact avec la route, ne peuvent servir à l'incorporation des chutes pour ne pas modifier-altérer les performances du pneumatique. Ainsi, pour les configurations avec deux matériaux, un pour la bande de protection, un pour la bande de roulement, seule la bande de protection peut être un mélange hôte, avec un volume de mélange hôte au plus égal à 20% du volume de la bande extérieure. Pour les configurations avec trois mélanges caoutchouteux, une bande de protection et deux mélanges différents dans la bande de roulement, seule la bande de protection peut être un mélange hôte, avec un volume de mélange hôte au plus égal à 20% du volume de la bande extérieure. Pour le pneumatique selon l'invention, le deuxième mélange caoutchouteux constituant le volume de la bande de protection et une partie de la bande de roulement et ayant un faible taux de contact, uniquement dans les virages sous forte force latérale, constitue un volume au moins égal à 25% du volume de la bande extérieure de préférence au moins égale à 40%. Ce plus grand volume permet naturellement d'incorporer un plus grand volume de chute mixte.

Le volume de chutes mixtes utilisable par pneu est défini par le volume d'accueil et le taux maximal de chutes mixtes admissible dans ce mélange caoutchouteux, car s'il est possible d'incorporer des chutes mixtes dans le mélange caoutchouteux hôte, il n'est pas possible d'en intégrer un trop fort taux au risque de voir ses propriétés modifiées au-delà de ce qui est souhaitable. Il est ainsi possible de calculer la puissance de recyclage Pr égale au pourcentage de chutes mixtes admissible dans le volume total de la bande extérieure. Pr est égale au volume du mélange caoutchouteux hôte multiplié par le pourcentage de chute mixte maximum dans le mélange hôte.

En prenant un pourcentage de chute mixte maximum dans le mélange hôte de 10% en volume, l'invention permet de recycler au moins 20% de chutes mixtes supplémentaires et jusqu'à 100% par rapport à l'état de la technique.

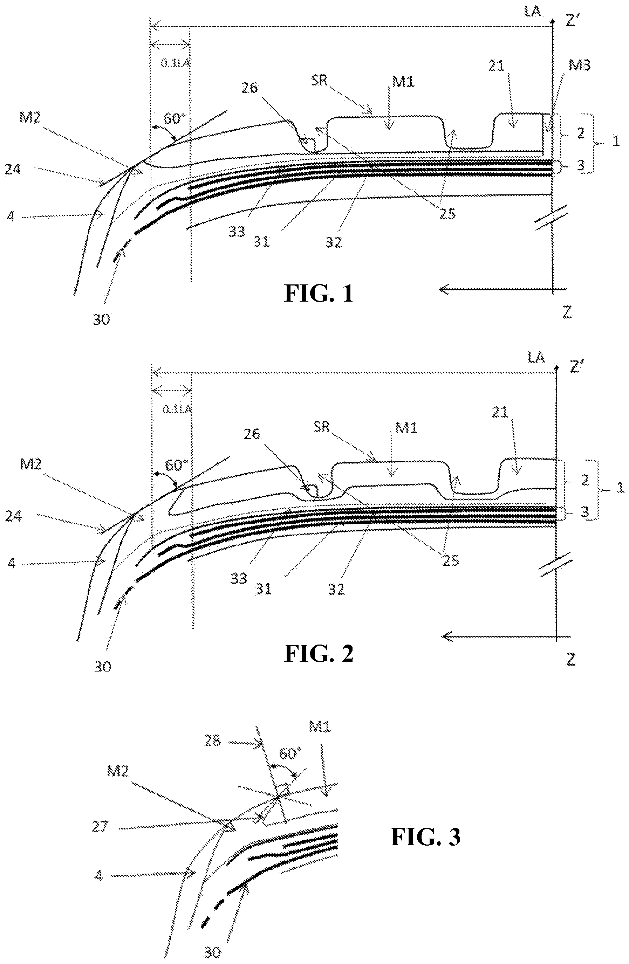

Les caractéristiques et les autres avantages de l'invention seront mieux compris à l'aide des figures 1 à 3, lesdites figures n'étant pas représentées à l'échelle mais de façon simplifiée, afin de faciliter la compréhension de l'invention. Les figures 1 à 3 sont des parties de pneumatique, en particulier son armature de sommet et sa bande extérieure et son flanc.

[Fig 1] La figure 1 représente schématiquement la demi coupe méridienne du sommet du pneumatique selon l'invention. Elle illustre en particulier le sommet 1 comprenant une bande extérieure 2 comprenant une bande roulement 21 destinée à venir en contact avec le sol par l'intermédiaire d'une surface de roulement SR de largeur LA. Le sommet 1 comprend également une armature de sommet 3, comprenant trois couches d'éléments de renforcement 31, 32, 33 radialement extérieures à la couche de carcasse 30. La bande extérieure 2 est radialement extérieure à la couche d'éléments de renforcement la plus radialement extérieure 33 de l'armature de sommet 3 et axialement intérieure à la partie des flancs 4 radialement extérieure à l'armature de sommet 3.

La bande extérieure est composée sur cet exemple de 3 mélanges caoutchouteux M1, M2 et M3. Le premier mélange caoutchouteux M1 est radialement extérieur au deuxième mélange caoutchouteux M2 et ils représentent au moins 90% du volume de la bande extérieure 2 - en l'occurrence 97%, les 3% restant étant constitués de M3. La bande extérieure comporte une partie centrale d'une largeur égale à 80% de la surface de roulement SR et deux parties axialement extérieures. Les parties axialement extérieures de la bande extérieure sont composées d'au moins 60% en volume du deuxième mélange M2. Le deuxième mélange M2 est sensiblement continu d'une partie extérieure de la bande extérieure à l'autre, à savoir qu'il est continu excepté si un mélange M3 fait la liaison des couches de sommet à la surface de roulement afin d'assurer le respect par le pneumatique de la norme sur la conductivité électrique des pneumatiques.

Sur la figure 1, on détermine sur un plan méridien les frontières axiales de la surface de roulement qui permettent de mesurer la largeur bande de roulement sur ce plan méridien. Dans certains cas, la largeur de la surface de roulement est trivialement déterminée par l'homme de l'art, car la nervure la plus axialement extérieure de la bande de roulement de chaque côté du plan équateur, présente une discontinuité claire permettant une mesure simple. Dans la figure 1, qui représente le cas de nombreux pneumatiques pour véhicule de tourisme où la surface de roulement SR est continue avec la surface extérieure du flanc, on trace, sur une coupe méridienne du pneumatique, en position montée gonflée à la pression nominale, la tangente 24 à la surface de roulement SR en tout point de ladite surface de roulement dans la zone de transition vers le flanc. De chaque côté du plan équateur, la frontière axiale passe par le point pour lequel l'angle entre ladite tangente 24 et une direction axiale ZZ' est égal à 60°. Lorsqu'il existe sur un plan méridien, plusieurs points d'un même côté du plan équateur pour lesquels l'angle entre ladite tangente et une direction axiale ZZ" est égal à 60°, on retient le point le plus radialement extérieur. La largeur de la bande de roulement au niveau du plan méridien est la distance axiale entre les deux points des deux frontières axiales de la surface de roulement. La largeur de la bande de roulement du pneumatique est la valeur maximale des largeurs de la bande de roulement sur tous les méridiens.

[Fig 2] La figure 2 donne une variante de l'invention vis-à-vis de la figure 1, où le mélange caoutchouteux M2 débouche sur la surface de roulement et où l'interface avec le mélange caoutchouteux M1 est radialement extérieur aux points les plus radialement intérieurs des surfaces de fond des sillons circonférentiels et des rainures 25. Dans les versions où la résistance au roulement serait la performance la plus recherchée, cette interface pourrait être radialement extérieure au témoin d'usure 26. En effet M2 est configuré pour être en contact avec le sol de roulage.

[Fig 3] La figure 3 montre un détail de la bande extérieure 2 et l'interface 27 entre le premier mélange caoutchouteux M1 et le deuxième mélange caoutchouteux M2 dans la partie axialement extérieure de la bande extérieure. Le premier mélange caoutchouteux M1 est axialement intérieur au deuxième mélange caoutchouteux M2, et donc le deuxième mélange caoutchouteux M2 est débouchant sur la surface externe de la bande extérieure 2 au niveau de la surface de roulement SR ou sur la surface externe de la bande extérieure en dehors de la surface de roulement. L'interface entre le premier et le deuxième mélange caoutchouteux forme un angle avec la normale 28 à la surface de roulement au point d'intersection de l'interface avec la surface extérieure de la bande extérieure, au plus égal à 60° en valeur absolue.

Une coupe méridienne du pneumatique est obtenue par découpage du pneumatique selon deux plans méridiens.

L'invention a été réalisée sur un pneumatique de dimension 225/45 ZR17 destiné à équiper un véhicule de tourisme satisfaisant les conditions pour être marqué du symbole 3PMSF autorisant son utilisation sur route enneigée sur le territoire européen. Les profondeurs D des rainures de la sculpture sont comprises entre 4 et 8 mm.

Les inventeurs disposent de plusieurs mélanges caoutchouteux issus de la même technologie de fabrication et de même matières premières et aptes à constituer la partie centrale de la bande extérieure. Les matériaux en question varient en termes de propriétés entre un mélange caoutchouteux plutôt rigide, adhérent et hystérétique MT1 et un matériau MT2 moins rigide, moins adhérent et moins hystérétique que MT1

Le mélange caoutchouteux MT1 a module de cisaillement élastique G* à 10% de déformation à 10 Hz à 23°C mesuré selon la norme ASTM D 5992 -96, égal à 2.65 MPa, une perte dynamique tanD-10_1, mesurée selon la norme ASTM D 5992 - 96, à une température de -10°C et sous une contrainte de 0,7 MPa à 10 Hz, à 0.73 et une perte dynamique tanD23_2 mesurée selon la même norme ASTM D 5992 - 96, à une température de 23°C et sous une déformation à 10% à 10 Hz, égale à 0.55.

Le mélange caoutchouteux MT2 a module de cisaillement élastique G* à 10% de déformation à 10 Hz à 23°C mesuré selon la norme ASTM D 5992 -96 égal à 1.45 MPa , une perte dynamique tanD-10_2, mesurée selon la norme ASTM D 5992 - 96, à une température de -10°C et sous une contrainte de 0,7 MPa à 10 Hz, égale à 0.31 et une perte dynamique tanD23_2 mesurée selon la même norme ASTM D 5992 - 96, à une température de 23°C et sous une déformation à 10% à 10 Hz, égale à 0.19.

Pour les pneumatiques selon l'état de la technique, le mélange apte à être en contact avec le sol est associé à un mélange caoutchouteux pour la bande de protection d'une épaisseur quasi constante égale à 2,1 mm en moyenne représentant 20% du volume la bande extérieure, et dont la perte dynamique tanD23_2 mesurée selon la même norme ASTM D 5992 - 96, à une température de 23°C et sous une déformation à 10% à 10 Hz, est égale à 0.12, dans l'objectif d'optimiser au mieux la résistance au roulement.

Un homme de l'art en faisant varier les propriétés du matériau apte à être en contact avec le sol entre les propriétés des mélanges caoutchouteux MT1 et MT2, peut concevoir des pneumatiques selon un certain compromis entre la résistance au roulement et l'adhérence.

Les inventeurs ont également réalisé un pneumatique selon l'invention où les mélanges radialement extérieurs sont composés du premier mélange caoutchouteux MT1 et du deuxième mélange caoutchouteux MT2. Les parties axialement extérieures de la bande extérieure du pneumatique comprennent au moins 85% en volume du deuxième mélange caoutchouteux MT2. Le mélange caoutchouteux MT2 est continu d'une partie axialement extérieure à l'autre de la bande extérieure 2 sur une épaisseur quasi constante de 2.1 mm. Au total, le volume du premier mélange caoutchouteux MT1 représente 57% du volume total de la bande extérieure.

Par rapport aux pneumatiques selon l'état de l'art soit, l'invention a pour une adhérence identique notamment sur sol enneigé, améliore de le compromis en résistance au roulement d'environ 5%, soit pour une même résistance au roulement et une même adhérence sur sol enneigé, améliore l'adhérence sur sol humide de 3%, les performances étant mesurées sur circuits.

Par ailleurs, la capacité de recyclage des mélanges MT1 et MT2 est augmentée de 100% comparativement aux pneumatiques hors invention.

## Revendications

1. Pneumatique, pour véhicule de tourisme, portant un marquage sur le flanc indiquant qu'il est conçu pour être utilisé sur une route enneigée, comprenant un sommet (1) comprenant une bande extérieure (2) comportant une bande de roulement destinée (21) à venir en contact avec le sol par l'intermédiaire d'une surface de roulement (SR), deux bourrelets destinés à venir en contact avec une jante et deux flancs (4) reliant le sommet aux bourrelets,
• la bande extérieure (2) étant radialement extérieure à une armature de sommet (3) comprenant des couches de sommet (31, 32, 33) comprenant des éléments de renforcement, et la bande de roulement étant axialement intérieure à la partie des flancs (4) radialement extérieure à l'armature de sommet (3),
• la bande extérieure (2) étant constituée d'une partie centrale et deux parties axialement extérieures,
• la partie centrale de la bande extérieure étant d'une largeur axiale égale à 80% de la largeur axiale (LA) de la surface de roulement (SR),
• la bande extérieure comprenant au moins deux mélanges caoutchouteux, ces deux mélanges caoutchouteux (M1, M2) composant au moins 90% du volume de la bande extérieure,
• le premier mélange caoutchouteux (M1) étant radialement extérieur au deuxième mélange caoutchouteux (M2), le deuxième mélange caoutchouteux (M2) composant au moins 60% du volume des parties axialement extérieures de la bande extérieure (2) et étant disposé en une couche sensiblement continue d'une partie axialement extérieure de la bande extérieure (2) à l'autre, ladite couche étant d'une épaisseur radiale minimale au moins égale à 0,3 mm,
**caractérisé en ce que** le premier mélange caoutchouteux (M1) a un module dynamique de cisaillement G*, à 10% de déformation à 10 Hz à 23°C mesuré selon la norme ASTM D 5992 - 96, au moins égal à 1.35 fois le module dynamique de cisaillement G*, à 10% de déformation à 10 Hz à 23°C mesuré selon la norme ASTM D 5992 - 96, du deuxième mélange caoutchouteux (M2), et au plus égal à 3 fois le module dynamique de cisaillement G*, à 10% de déformation à 10 Hz à 23°C mesuré selon la norme ASTM D 5992 - 96, du deuxième mélange caoutchouteux (M2),
**et en ce que** le premier mélange caoutchouteux (M1) a une perte dynamique tanD-10_1, mesurée selon la norme ASTM D 5992 - 96, à une température de - 10°C et sous une contrainte de 0,7 MPa à 10 Hz, au moins égale à 0,5,
**et en ce que** le deuxième mélange caoutchouteux (M2) a une perte dynamique tanD23_2 mesurée selon la même norme ASTM D 5992 - 96, à une température de 23°C et sous une déformation à 10% à 10 Hz, au plus égale à 0.3.

2. Pneumatique selon la revendication précédente, dans lequel le deuxième mélange caoutchouteux (M2) a un module dynamique de cisaillement G*, à 10% de déformation à 10 Hz à 23°C mesuré selon la norme ASTM D 5992 - 96, au moins égal à 0.8 MPA et au plus égal à 4MPa, préférentiellement au moins égal à 1 MPa et au plus égal à 2.5 MPa.

3. Pneumatique selon l'une quelconque des revendications précédentes, dans lequel le premier mélange caoutchouteux (M1) a une perte dynamique tanD-10_1, mesurée selon la norme ASTM D 5992 - 96, à une température de 0°C et sous une contrainte de 0,7 MPa à 10 Hz, au moins égale à 0,7.

4. Pneumatique selon l'une quelconque des revendications précédentes, dans lequel le deuxième mélange caoutchouteux (M2) a un module d'extension sécant MA300 à 300 % de déformation, mesuré à 23° C selon la norme ASTM D 412-16, au moins égal à 1.4 MPa, préférentiellement au moins égal à 1.7 MPa.

5. Pneumatique selon l'une quelconque des revendications précédentes, dans lequel le volume total du deuxième mélange caoutchouteux (M2) représente au moins 25% et au plus 50% du volume de la bande extérieure.

6. Pneumatique selon l'une quelconque des revendications précédentes, dans lequel le deuxième mélange caoutchouteux (M2) est disposé en une couche sensiblement continue d'une partie axialement extérieure de la bande extérieure (2) à l'autre, ladite couche étant d'une épaisseur minimale au moins égale à 0,6 mm, préférentiellement au moins égale à 1mm.

7. Pneumatique selon l'une quelconque des revendications précédentes, dans lequel le premier mélange caoutchouteux (M1) est axialement intérieur au deuxième mélange caoutchouteux (M2), et dans lequel l'interface entre le premier et le deuxième mélange caoutchouteux forme un angle avec la normale (27) à la surface externe de la bande extérieure (2) au point d'intersection de l'interface avec ladite surface au plus égal à 60° en valeur absolue, de préférence au plus égal à 20° en valeur absolue.

8. Pneumatique selon l'une quelconque des revendications précédentes, dans lequel, la bande de roulement (21) comprenant des rainures ou des sillons circonférentiels, la couche du deuxième mélange caoutchouteux (M2), sensiblement continue d'une partie externe de la bande extérieure (2) à l'autre, est radialement intérieure dans la partie centrale de la bande extérieure (2) aux surfaces de fond des rainures ou des sillons circonférentiels de la bande de roulement (21).

9. Pneumatique selon l'une quelconque des revendications précédentes, dans lequel, la bande de roulement (21) comprenant des rainures ou des sillons circonférentiels, les rainures ou des sillons circonférentiels sont configurés de telle sorte que le taux de creux surfacique de la surface de roulement augmente avec l'usure du pneumatique.

10. Pneumatique selon l'une quelconque des revendications 1 à 9, dans lequel, les premier et deuxième mélanges caoutchouteux comportent des charges renforçantes composées d'au moins 80% de silice, exprimée en pourcentage de la masse totale des charges renforçantes.

11. Pneumatique selon l'une quelconque des revendications précédentes, dans lequel les volumes des premier et deuxième mélanges caoutchouteux (M1, M2) de la bande extérieure (2) sont sensiblement symétriques par rapport au plan équateur.

12. Pneumatique selon l'une quelconque des revendications 1 à 9, dans lequel la bande extérieure est composée de deux mélanges caoutchouteux (M1, M2) et l'un de ces mélanges caoutchouteux est un conducteur électrique et est configuré pour que la résistance électrique du pneumatique mesurée selon la norme ISO 16392:2017 soit au plus égale à 10¹⁰ ohms, de préférence au plus égale à 10⁸ ohms.

13. Pneumatique selon l'une quelconque des revendications 1 à 11, dans lequel la bande extérieure est composée de trois mélanges caoutchouteux (M1, M2, M3), le troisième mélange caoutchouteux (M3) étant disposé entre la couche (33) d'éléments de renforcement de l'armature de sommet (3) la plus radialement extérieure et la surface de roulement (SR) et configuré pour que la résistance électrique du pneumatique mesurée selon la norme ISO 16392:2017 soit au plus égale à 10¹⁰ ohms, de préférence au plus égale à 10⁸ ohms.

14. Pneumatique selon l'une quelconque des revendications 1 à 11, dans lequel la bande extérieure est composée de trois mélanges caoutchouteux, et dans lequel le troisième mélange caoutchouteux est disposé entre la couche d'éléments de renforcement de l'armature de sommet la plus radialement extérieure et le deuxième mélange caoutchouteux (M2), l'épaisseur maximale de ce troisième mélange caoutchouteux étant au plus égale à 0.6 mm, préférentiellement au plus égale à 0.4 mm.

15. Pneumatique selon l'une quelconque des revendications 1 à 11, dans lequel la bande extérieure est composée de quatre mélanges caoutchouteux, dans lequel le troisième mélange caoutchouteux est disposé entre la couche (33) d'éléments de renforcement de l'armature de sommet (2) la plus radialement extérieure et le deuxième mélange caoutchouteux (M2), l'épaisseur maximale de ce troisième mélange caoutchouteux est au plus égale à 0.4 mm, et dans lequel le quatrième mélange caoutchouteux est disposé entre la couche (33) d'éléments de renforcement de l'armature de sommet (3) la plus radialement extérieure et la surface de roulement (SR) et configuré pour que la résistance électrique du pneumatique mesurée selon la norme ISO 16392:2017 soit au plus égale à 10¹⁰ ohms, de préférence au plus égale à 10⁸ ohms.

## Patentansprüche

1. Reifen für ein Personenkraftfahrzeug mit einer Markierung auf der Flanke, die anzeigt, dass er für den Einsatz auf einer beschneiten Straße vorgesehen ist, umfassend einen Scheitel (1), der einen äußeren Streifen (2) umfasst, der einen Laufstreifen (21) aufweist, der dazu bestimmt ist, über eine Lauffläche (SR) mit dem Boden in Kontakt zu kommen, zwei Wülste, die dazu bestimmt sind, mit einer Felge in Kontakt zu kommen, und zwei Flanken (4), die den Scheitel mit den Wülsten verbinden,
• wobei sich der äußere Streifen (2) radial außerhalb einer Scheitelbewehrung (3) befindet, die Scheitelschichten (31, 32, 33) mit Verstärkungselementen umfasst, und wobei sich der Laufstreifen axial innerhalb des Teils der Flanken (4) befindet, der sich radial außerhalb der Scheitelbewehrung (3) befindet,
• wobei der äußere Streifen (2) aus einem mittleren Teil und zwei axial äußeren Teilen gebildet ist,
• wobei der mittlere Teil des äußeren Streifens eine axiale Breite von 80 % der axialen Breite (LA) der Lauffläche (SR) aufweist,
• wobei der äußere Streifen mindestens zwei Kautschukmischungen umfasst, wobei diese beiden Kautschukmischungen (M1, M2) mindestens 90 % des Volumens des äußeren Streifens ausmachen,
• wobei sich die erste Kautschukmischung (M1) radial außerhalb der zweiten Kautschukmischung (M2) befindet, wobei die zweite Kautschukmischung (M2) mindestens 60 % des Volumens des axialen äußeren Teils des äußeren Streifens (2) ausmacht und in einer im Wesentlichen durchgehenden Schicht von einem axial äußeren Teil des äußeren Streifens (2) zum anderen angeordnet ist, wobei die Schicht eine radiale Mindestdicke von mindestens 0,3 mm aufweist,
**dadurch gekennzeichnet, dass** die erste Kautschukmischung (M1) einen dynamischen Schubmodul G bei einer 10%-igen Verformung bei 10 Hz und 23°C, gemessen nach der Norm ASTM D 5992 - 96, aufweist, der mindestens dem 1,35-fachen des dynamischen Schubmoduls G* bei einer 10%-igen Verformung bei 10 Hz und 23°C, gemessen nach der Norm ASTM D 5992 - 96, der zweiten Kautschukmischung (M2) und höchstens dem 3-fachen des dynamischem Schubmoduls G* bei einer 10%-igen Verformung bei 10 Hz und 23°C, gemessen nach der Norm ASTM D 5992 - 96, der zweiten Kautschukmischung (M2) entspricht,
und dass die erste Kautschukmischung (M1) einen dynamischen Verlust tanD-10_1, gemessen nach der Norm ASTM D 5992 - 96, bei einer Temperatur von -10°C und einer Spannung von 0,7 MPa bei 10 Hz, von mindestens 0,5 aufweist,
und dass die zweite Kautschukmischung (M2) einen dynamischen Verlust tanD23_2, gemessen nach derselben Norm ASTM D 5992 - 96, bei einer Temperatur von 23°C und einer 10%-igen Verformung bei 10 Hz, von höchstens 0,3 aufweist.

2. Reifen nach dem vorangehenden Anspruch, wobei die zweite Kautschukmischung (M2) einen dynamischen Schubmodul G* bei einer 10%-igen Verformung bei 10 Hz und 23°C, gemessen nach der Norm ASTM D 5992 - 96, von mindestens 0,8 MPA und höchstens 4 MPa, vorzugsweise mindestens 1 MPa und höchstens 2,5 Mpa, aufweist.

3. Reifen nach einem der vorangehenden Ansprüche, wobei die erste Kautschukmischung (M1) einen dynamischen Verlust tanD-10_1, gemessen nach der Norm ASTM D 5992 - 96, bei einer Temperatur von 0°C und einer Spannung von 0,7 MPa bei 10 Hz, von mindestens 0,7 aufweist.

4. Reifen nach einem der vorangehenden Ansprüche, wobei die zweite Kautschukmischung (M2) einen Sekantendehnungsmodul MA300 bei 300%-iger Verformung, gemessen bei 23°C nach der Norm ASTM D 412-16, von mindestens 1,4 MPa, vorzugsweise mindestens 1,7 Mpa, aufweist.

5. Reifen nach einem der vorangehenden Ansprüche, wobei das Gesamtvolumen der zweiten Kautschukmischung (M2) mindestens 25 % und höchstens 50 % des Volumens des äußeren Streifens ausmacht.

6. Reifen nach einem der vorangehenden Ansprüche, wobei die zweite Kautschukmischung (M2) in einer im Wesentlichen durchgehenden Schicht von einem axial äußeren Teil des äußeren Streifens (2) zum anderen angeordnet ist, wobei die Schicht eine Mindestdicke von mindestens 0,6 mm, vorzugsweise mindestens 1 mm, aufweist.

7. Reifen nach einem der vorangehenden Ansprüche, wobei die erste Kautschukmischung (M1) axial innerhalb der zweiten Kautschukmischung (M2) liegt und wobei die Schnittstelle zwischen der ersten und der zweiten Kautschukmischung einen Winkel mit der Senkrechten (27) zur Fläche außerhalb des äußeren Streifens (2) am Schnittpunkt der Schnittstelle mit der Fläche von höchstens 60° im Absolutwert, vorzugsweise höchstens 20° im Absolutwert, bildet.

8. Reifen nach einem der vorangehenden Ansprüche, wobei der Laufstreifen (21) umlaufende Nuten oder Rillen umfasst, wobei die Schicht der zweiten Kautschukmischung (M2), die von einem äußeren Teil des äußeren Streifens (2) zum anderen im Wesentlichen durchgehend ist, im mittleren Teil des äußeren Streifens (2) radial innerhalb der Bodenflächen der umlaufenden Nuten bzw. Rillen des Laufstreifens (21) liegt.

9. Reifen nach einem der vorangehenden Ansprüche, wobei der Laufstreifen (21) umlaufende Nuten oder Rillen umfasst, wobei die umlaufenden Nuten bzw. Rillen so konfiguriert sind, dass der oberflächenbezogene Hohlraumanteil der Lauffläche mit dem Verschleiß des Reifens zunimmt.

10. Reifen nach einem der Ansprüche 1 bis 9, wobei die erste und die zweite Kautschukmischungen verstärkende Füllstoffe aufweisen, die zu mindestens 80 % aus Kieselsäure zusammengesetzt sind, ausgedrückt als Prozentsatz der Gesamtmasse der verstärkenden Füllstoffe.

11. Reifen nach einem der vorangehenden Ansprüche, wobei die Volumina der ersten und der zweiten Kautschukmischung (M1, M2) des äußeren Streifens (2) in Bezug auf eine Äquatorialebene im Wesentlichen symmetrisch sind.

12. Reifen nach einem der Ansprüche 1 bis 9, wobei der äußere Streifen aus zwei Kautschukmischungen (M1, M2) zusammengesetzt ist und eine dieser Kautschukmischungen ein elektrischer Leiter und so konfiguriert ist, dass der elektrische Widerstand des Reifens, gemessen nach der Norm ISO 16392:2017, höchstens 10¹⁰ Ohm, vorzugsweise höchstens 10⁸ Ohm, beträgt.

13. Reifen nach einem der Ansprüche 1 bis 11, wobei der äußere Streifen aus drei Kautschukmischungen (M1, M2, M3) zusammengesetzt ist, wobei die dritte Kautschukmischung (M3) zwischen der radial äußersten Schicht (33) von Verstärkungselementen der Scheitelbewehrung (3) und der Lauffläche (SR) angeordnet und so konfiguriert ist, dass der elektrische Widerstand des Reifens, gemessen nach der Norm ISO 16392:2017, höchstens 10¹⁰ Ohm, vorzugsweise höchstens 10⁸ Ohm, beträgt.

14. Reifen nach einem der Ansprüche 1 bis 11, wobei der äußere Streifen aus drei Kautschukmischungen zusammengesetzt ist und wobei die dritte Kautschukmischung zwischen der radial äußersten Schicht von Verstärkungselementen der Scheitelbewehrung und der zweiten Kautschukmischung (M2) angeordnet ist, wobei die maximale Dicke dieser dritten Kautschukmischung höchstens 0,6 mm, vorzugsweise höchstens 0,4 mm, beträgt.

15. Reifen nach einem der Ansprüche 1 bis 11, wobei der äußere Streifen aus vier Kautschukmischungen zusammengesetzt ist, wobei die dritte Kautschukmischung zwischen der radial äußersten Schicht (33) von Verstärkungselementen der Scheitelbewehrung (2) und der zweiten Kautschukmischung (M2) angeordnet ist, wobei die maximale Dicke dieser dritten Kautschukmischung höchstens 0,4 mm beträgt und wobei die vierte Kautschukmischung zwischen der radial äußersten Schicht (33) von Verstärkungselementen der Scheitelbewehrung (3) und der Lauffläche (SR) angeordnet und so konfiguriert ist, dass der elektrische Widerstand des Reifens, gemessen nach der Norm ISO 16392:2017, höchstens 10¹⁰ Ohm, vorzugsweise höchstens 10⁸ Ohm, beträgt.

## Claims

1. Tyre, for a passenger vehicle, bearing a marking on the sidewall that indicates that it is designed to be used on a snow-covered road, comprising a crown (1) comprising an outer strip (2) having a tread (21) that is intended to come into contact with the ground via a tread surface (SR), two beads that are intended to come into contact with a rim, and two sidewalls (4) that connect the crown to the beads,
• the outer strip (2) being radially on the outside of a crown reinforcement (3) comprising crown layers (31, 32, 33) comprising reinforcing elements, and the tread being axially on the inside of the part of the sidewalls (4) that is radially on the outside of the crown reinforcement (3),
• the outer strip (2) being constituted of a central part and two axially outer parts,
• the central part of the outer strip having an axial width equal to 80% of the axial width (LA) of the tread surface (SR),
• the outer strip comprising at least two rubber compounds, these two rubber compounds (M1, M2) making up at least 90% of the volume of the outer strip,
• the first rubber compound (M1) being radially on the outside of the second rubber compound (M2), the second rubber compound (M2) making up at least 60% of the volume of the axially outer parts of the outer strip (2) and being disposed in a layer that is substantially continuous from one axially outer part of the outer strip (2) to the other, said layer having a minimum radial thickness at least equal to 0.3 mm,
**characterized in that** the first rubber compound (M1) has a dynamic shear modulus G*, at 10% deformation at 10 Hz at 23°C measured in accordance with standard ASTM D 5992 - 96, at least equal to 1.35 times the dynamic shear modulus G*, at 10% deformation at 10 Hz at 23°C measured in accordance with standard ASTM D 5992 - 96, of the second rubber compound (M2) and at most equal to 3 times the dynamic shear modulus G*, at 10% deformation at 10 Hz at 23°C measured in accordance with standard ASTM D 5992 - 96, of the second rubber compound (M2),
**and in that** the first rubber compound (M1) has a dynamic loss tanD-10_1, measured in accordance with standard ASTM D 5992 - 96, at a temperature of - 10°C and under a stress of 0.7 MPa at 10 Hz, at least equal to 0.5,
**and in that** the second rubber compound (M2) has a dynamic loss tanD23_2, measured in accordance with the same standard ASTM D 5992 - 96, at a temperature of 23°C and under a deformation of 10% at 10 Hz, at most equal to 0.3.

2. Tyre according to the preceding claim, wherein the second rubber compound (M2) has a dynamic shear modulus G*, at 10% deformation at 10 Hz at 23°C measured in accordance with standard ASTM D 5992 - 96, at least equal to 0.8 MPa and at most equal to 4 MPa, preferentially at least equal to 1 MPa and at most equal to 2.5 MPa.

3. Tyre according to either one of the preceding claims, wherein the first rubber compound (M1) has a dynamic loss tanD-10_1, measured in accordance with standard ASTM D 5992 - 96, at a temperature of 0°C and under a stress of 0.7 MPa at 10 Hz, at least equal to 0.7.

4. Tyre according to any one of the preceding claims, wherein the second rubber compound (M2) has a secant extension modulus MA300 at 300% deformation, measured at 23°C in accordance with standard ASTM D 412-16, at least equal to 1.4 MPa, preferentially at least equal to 1.7 MPa.

5. Tyre according to any one of the preceding claims, wherein the total volume of the second rubber compound (M2) represents at least 25% and at most 50% of the volume of the outer strip.

6. Tyre according to any one of the preceding claims, wherein the second rubber compound (M2) is disposed in a layer that is substantially continuous from one axially outer part of the outer strip (2) to the other, said layer having a minimum thickness at least equal to 0.6 mm, preferentially at least equal to 1 mm.

7. Tyre according to any one of the preceding claims, wherein the first rubber compound (M1) is axially on the inside of the second rubber compound (M2), and wherein the interface between the first and the second rubber compounds forms an angle with the normal (27) to the external surface of the outer strip (2) at the point of intersection of the interface with said surface that is at most equal to 60° in terms of absolute value, preferably at most equal to 20° in terms of absolute value.

8. Tyre according to any one of the preceding claims, wherein, since the tread (21) comprises grooves or circumferential furrows, the layer of the second rubber compound (M2), which is substantially continuous from one outer part of the outer strip (2) to the other, is radially on the inside, in the central part of the outer strip (2), of the bottom surfaces of the grooves or of the circumferential furrows of the tread (21).

9. Tyre according to any one of the preceding claims, wherein, since the tread (21) comprises grooves or circumferential furrows, the grooves or circumferential furrows are configured such that the surface void ratio of the tread surface increases with wear of the tyre.

10. Tyre according to any one of Claims 1 to 9, wherein the first and second rubber compounds have reinforcing fillers made up of at least 80% silica, expressed as a percentage of the total mass of the reinforcing fillers.

11. Tyre according to any one of the preceding claims, wherein the volumes of the first and second rubber compounds (M1, M2) of the outer strip (2) are substantially symmetrical with respect to the equatorial plane.

12. Tyre according to any one of Claims 1 to 9, wherein the outer strip is made up of two rubber compounds (M1, M2) and one of these rubber compounds is an electrical conductor and is configured such that the electrical resistance of the tyre, measured in accordance with standard ISO 16392:2017, is at most equal to 10¹⁰ ohms, preferably at most equal to 10⁸ ohms.

13. Tyre according to any one of Claims 1 to 11, wherein the outer strip is made up of three rubber compounds (M1, M2, M3), the third rubber compound (M3) being disposed between the radially outermost layer (33) of reinforcing elements of the crown reinforcement (3) and the tread surface (SR) and configured such that the electrical resistance of the tyre, measured in accordance with standard ISO 16392:2017, is at most equal to 10¹⁰ ohms, preferably at most equal to 10⁸ ohms.

14. Tyre according to any one of Claims 1 to 11, wherein the outer strip is made up of three rubber compounds, and wherein the third rubber compound is disposed between the radially outermost layer of reinforcing elements of the crown reinforcement and the second rubber compound (M2), the maximum thickness of this third rubber compound being at most equal to 0.6 mm, preferentially at most equal to 0.4 mm.

15. Tyre according to any one of Claims 1 to 11, wherein the outer strip is made up of four rubber compounds, wherein the third rubber compound is disposed between the radially outermost layer (33) of reinforcing elements of the crown reinforcement (2) and the second rubber compound (M2), the maximum thickness of this third rubber compound is at most equal to 0.4 mm, and wherein the fourth rubber compound is disposed between the radially outermost layer (33) of reinforcing elements of the crown reinforcement (3) and the tread surface (SR) and configured such that the electrical resistance of the tyre, measured in accordance with standard ISO 16392:2017, is at most equal to 10¹⁰ ohms, preferably at most equal to 10⁸ ohms.
